(19) Europäisches Patentamt
European Patent Office
Office européen des brevets

(11) Publication number: **0 270 674 B1**

# EUROPEAN PATENT SPECIFICATION

(45) Date of publication of patent specification :
**12.06.91 Bulletin 91/24**

(51) Int. Cl.⁵ : **E02F 3/42, E02F 3/43,**
**E02F 3/84, E02F 3/85,**
**E02F 9/20, E02F 9/22**

(21) Application number : **87902706.8**

(22) Date of filing : **07.04.87**

(86) International application number :
**PCT/JP87/00215**

(87) International publication number :
**WO 87/06287 22.10.87 Gazette 87/23**

(54) AUTOMATIC TRANSMISSION OF WHEEL LOADER.

(30) Priority : **08.04.86 JP 52646/86**

(43) Date of publication of application :
**15.06.88 Bulletin 88/24**

(45) Publication of the grant of the patent :
**12.06.91 Bulletin 91/24**

(84) Designated Contracting States :
**DE GB SE**

(56) References cited :
**EP-A- 0 123 549**
**EP-A- 0 216 410**
**FR-A- 2 535 147**
**GB-A- 2 068 890**

(56) References cited :
**JP-A- 5 589 544**
**JP-A-59 220 535**
**JP-B- 5 822 617**
**US-A- 4 282 933**

(73) Proprietor : **KABUSHIKI KAISHA KOMATSU**
**SEISAKUSHO**
**3-6, Akasaka 2-chome**
**Minato-ku Tokyo 107 (JP)**

(72) Inventor : **FUKUDA, Masao**
**2-19-13, Senba-cho**
**Kawagoe-shi Saitama-ken 350 (JP)**

(74) Representative : **Newstead, Michael John**
**Page & Co. Temple Gate House Temple Gate**
**Bristol BS1 6PL (GB)**

## Description

The present invention relates to automatic speed stage changing apparatus for a wheel loader.

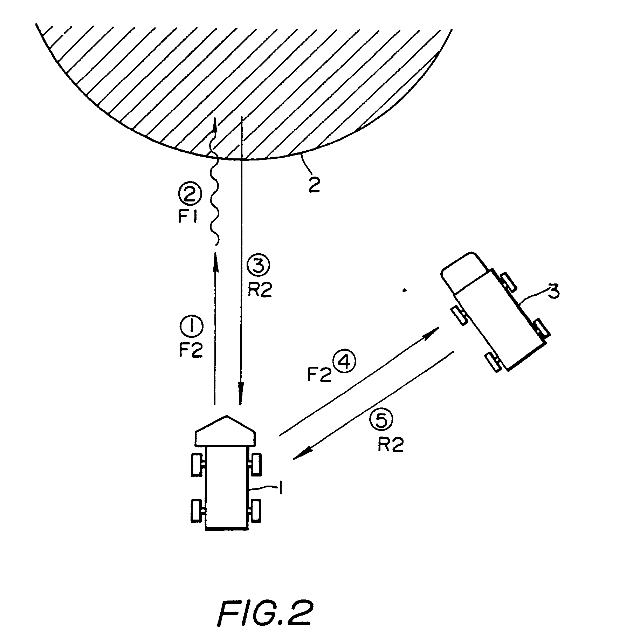

Generally, a wheel loader is used for the purpose of digging into a hill-shaped earth mass and loading the thus dug earth on a dump truck, Fig. 2 illustrates a series of operations ranging from digging by a wheel loader 1 to loading of dug earth on a truck 3, and this is a most frequently employed operation pattern which is called a V-shaped operation.

To shorten working time in this V-shaped operation (comprising operations① to⑤ as represented by arrows), it is required that operations are performed in the following manner.

Namely, the wheel loader 1 moves forwardly toward a hill-shaped earth mass 2 at a second (high) forward movement speed (F2) (operation ①) and when it is close to the hill-shaped earth mass 2 (by a distance in the range from 0.5 m to 1.0 m), it is caused to plunge into the hill-shaped earth mass 2 at a first (low) forward movement speed (F1) in order to enhance a tractive force when digging work is conducted (operation②). On completion of a digging step the wheel loader moves from the position of digging at a second (high) rearward movement speed (R2) (operation③) and subsequently the direction of movement of the wheel loader 1 is changed so that it moves toward the truck 3 at high speed F2 (operation④). When a step of loading dug earth on the truck 3 is completed, the wheel loader 1 moves away from the truck 3 at high speed R2 (operation⑤).

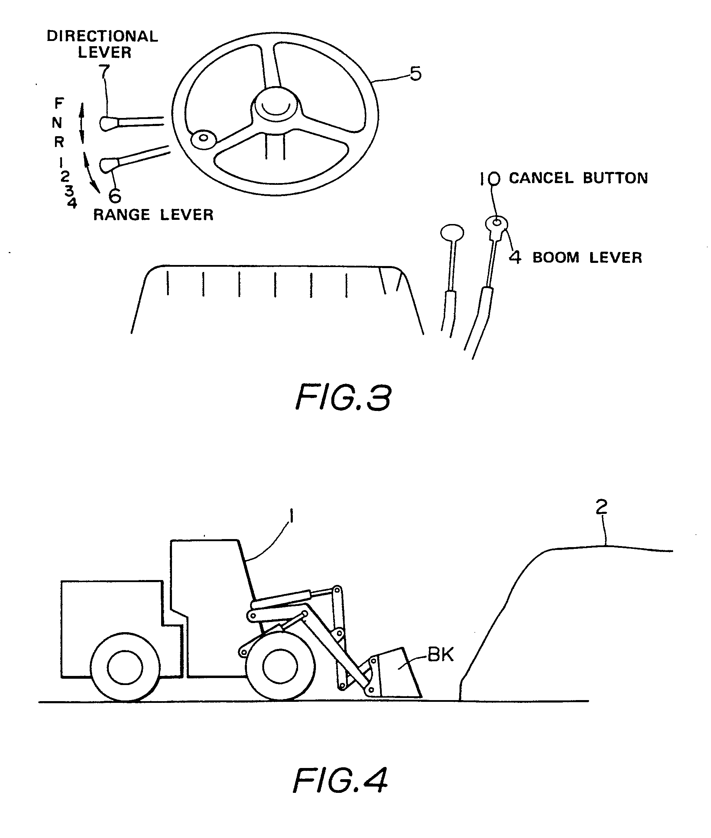

Heretofore, when the aforesaid operation ① is changed to the aforesaid operation②, a speed stage should be shifted from F2 to F1 and moreover a bucket BK of the wheel loader should come in contact with the ground, as shown in Fig. 4. However, this handling is very troublesome.

Namely, due to the fact that a boom lever 4 is grasped by an operator's right hand and a steering wheel 5 is grasped by his left hand as shown in Fig. 3, the left hand needs to be parted from the wheel 5 for a time during forward movement when a speed stage is shifted from F2 to F1. However, this is dangerous and troublesome, and because it is troublesome, sometimes an operator forgets the execution of shift-down or executes shift-down after the wheel loader plunges into the hill-shaped earth mass, the operator paying much attention to contact of the bucket with the ground.

When an execution of shift-down is forgotten, smooth scooping cannot be effected due to reduced tractive force and thereby a sufficient amount of dug earth cannot be scooped by the bucket. Further, when shift-down is executed with delay, a time for which driving force is not exerted temporarily is developed with the result that the body of the wheel loader is pushed back, an operator feels unpleasant or smooth scooping cannot be carried out.

According to the apparatus of the Japanese Patent Application Laid-open No. 59-220535/1984, a variable capacity torque converter consisting of a torque converter and a clutch is interposed in series between an engine and a transmission, and a distribution ratio of the engine output to the work machine and the running system is adjusted by controlling a slipping rate of the clutch. Namely, the slipping rate of the clutch is so controlled that the following driving modes 1 to 3 are realized in order of mode 1, mode 2, mode 1, mode 3 and mode 1 in correspondence with the above-mentioned operations① to⑤.

In the driving mode 1, the slipping rate of the clutch is made to be zero. In other words, the clutch is completely engaged so that the distribution ratio of the engine output to the running system is made to be maximum.

In the driving mode 2, the slipping rate of the clutch is controlled so that the output torque of the torque converter becomes a predetermined torque (the maximum torque which does not cause tire slipping).

In the driving mode 3, the slipping rate of the clutch is controlled so that an input/output rotational ratio becomes a predetermined rotational ratio (a distribution ratio of the engine output suitable for driving while lifting up the bucket).

The above-mentioned prior art is so arranged that the speed stage is manually shifted by an operator, the driving modes are changed when the speed stage is shifted, and the shifting timing of the speed stage is detected by a CPU which executes controls corresponding to each driving mode.

According to the above-mentioned prior art, the cycle time of the V-shaped operation in which the driving operations① to⑤ are sequentially executed can be shortened. However, in the apparatus of the above-mentioned prior art, the speed stage is manually shifted by an operator.

According to the present invention, there is provided automatic speed stage changing apparatus for a wheel loader including a bucket and boom, the apparatus comprising :

speed stage signal generating means for generating a speed stage signal representative of a speed stage ;

speed stage selecting means for electrically selecting a speed stage of a transmission to come into engagement in response to said speed stage signal ;

first detecting means for providing a detection signal if the boom assumes a predetermined boom angle suitable for digging work ;

second detecting means for providing a detection signal if the bucket assumes a predetermined bucket angle suitable for digging work ; and

shifting means adapted to output a signal for a predetermined lower speed stage in place of the signal provided by said speed stage signal generating means if detecting signals are provided by both said first and second detecting means.

The present invention will now be described, by way of example, with reference to the accompanying drawings, in which :

Fig. 1 is a circuit diagram illustrating an embodiment of the present invention ;

Fig. 2 is a view which is used for the purpose of illustrating a V-shaped operation of a wheel loader ;

Fig. 3 is a view illustrating an area in the operator's cabin of the wheel loader ; and

Fig. 4 is a view illustrating the wheel loader just before it plunges into a hill-shaped earth mass.

The present invention takes into account the fact that during a V-shaped operation, the bottom of the bucket comes into contact with the ground while maintaining its horizontal posture only when the bucket is ready to plunge into a hill-shaped earth mass. The boom and the bucket are provided with detecting means for detecting that respective predetermined angles are reached, and if these detecting means detect that the aforesaid predetermined angles are reached, a speed stage is automatically shifted down to a lower speed stage. This is effective for reducing an operator's handling just before the bucket plunges into the hill-shaped earth mass.

Further, according to the present invention the aforesaid automatic shift-down is released if the speed stage represents movement of the wheel loader other than forward movement, and thereafter the speed stage is automatically restored from the aforesaid lower speed stage to a certain specified speed stage. This causes an operator's handling to be reduced at a time of rearward movement after completion of digging work.

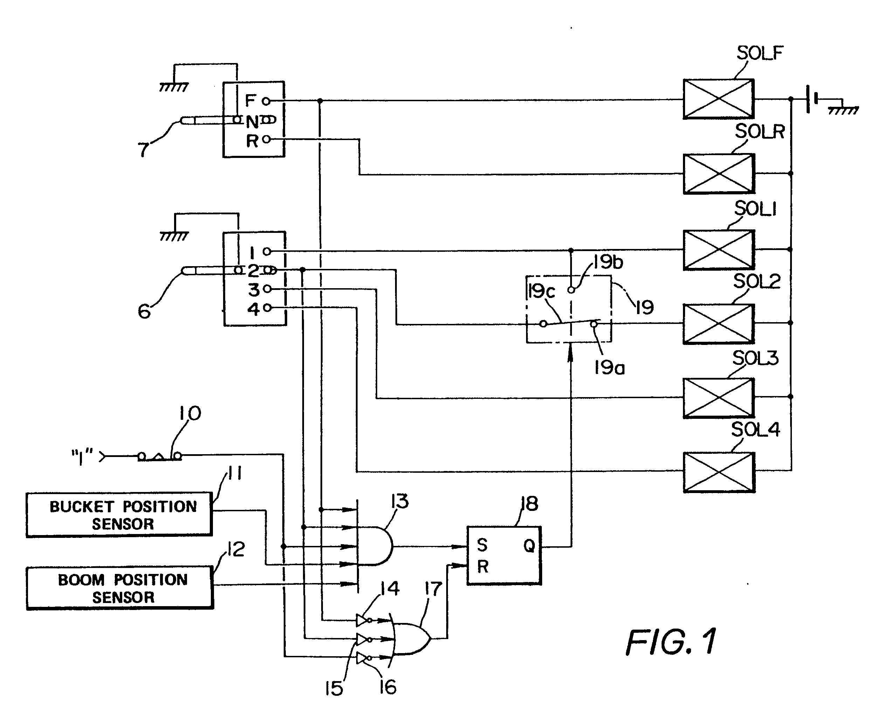

Fig. 1 is a circuit diagram illustrating an embodiment of the present invention. It should be noted that a transmission which is employed for this embodiment determines its speed stage in response to an electrical signal representative of one of several speed stages (four speeds for forward and rearward movements).

In Fig. 1, a directional lever 7 is a lever for selecting forward movement F, a neutral state N or rearward movement R and a range lever 6 is a lever for selecting the speed stage from first, second, third and fourth speed stages in forward movement F or rearward movement R.

When the directional lever 7 is shifted for forward movement F, a solenoid SOL F is energized and the transmission (not shown) is put into a forward movement state. When the directional lever 7 is shifted for rearward movement R, a solenoid SOL R is energized and the transmission is put into a rearward movement state.

Similarly, when the range lever 6 is shifted to the first speed stage, the second speed stage, the third speed stage or the fourth speed stage, a solenoid SOL 1, SOL 2, SOL 3 or SOL 4 respectively is energized and the transmission is put into the first speed stage, the second speed stage, the third speed stage or the fourth speed stage respectively.

Therefore, by handling the range lever 6 and the directional lever 7, any of four forward speed stages and four rearward speed stages, that is eight speed stages in total, may be selected.

Next, a description will be made below as to components which are added for the apparatus to be in accordance with the present invention.

The aforesaid added components comprise : a cancel button 10 ; a bucket position detecting sensor 11 ; a boom position detecting sensor 12 ; an AND circuit 13 ; inverters 14, 15 and 16 ; an OR circuit 17 ; a flip-flop 18 ; and a shifting switch 19.

The cancel button 10 is operated in the case where the existing speed change is cancelled and it is located, for instance, on a grip of the boom lever 4 as shown in Fig. 3. Normally the cancel button 10 provides a signal "1" to the AND circuit 13 and the inverter 16, and when it is operated manually to open, it provides a signal "0" to the AND circuit 13 and the inverter 16.

The bucket position detecting sensor 11 and the boom position detecting sensor 12 are adapted to detect that the bucket and the boom assume a predetermined bucket angle and a predetermined boom angle respectively. More particularly, they detect the specific elongate positions of a bucket cylinder and a boom cylinder respectively and in response to such detection each provides a signal "1" to AND circuit 13. Each is constructed by using, for instance, a limit switch, an encoder for detecting a turning angle, or the like. In the case where a limit switch is used, it is located in such a manner that it is turned on when the respective cylinder assumes a specific elongate position. In the case where an encoder is used, a preset turning angle which is obtained when the cylinder assumes a specific elongate position is used as a comparative reference.

The specific elongate positions for the bucket cylinder and the boom cylinder may be, for instance, positions which are assumed by the cylinders when the bottom surface of the bucket comes in contact with the ground and the bucket is oriented horizontally, as shown in Fig. 4.

Further, in association with handling of the directional lever 7, when the directional lever 7 assumes the position of forward movement F, a signal "1" is transmitted to the AND circuit 13 and the inverter 14, and in association with handling of the range lever 6, when the range lever 6 assumes the position for the second speed stage, a signal "1" is transmitted to the AND circuit 13 and the inverter 15.

When the AND circuit 13 has a signal "1" at each of its five inputs, an AND condition is fulfilled and a signal "1" is provided to a set input S of the flip-flop 18. Further, when the OR circuit 17 receives a signal "1" from any of the aforesaid three inverters 14, 15 and 16, a signal "1" is provided to a reset input R of the flip-flop 18.

When a signal "1" is provided to the set input S, the flip-flop 18 is set and a signal "1" is outputted to the shifting switch 19 from an output terminal Q whereby a movable contact 19c in the shifting switch 19 is connected to a contact point 19b. Further, when a signal "1" is provided to the reset input R, the flip-flop 18 is reset and a signal "0" is outputted to the shifting switch 19 from the output terminal Q and the movable contact 19c of the shift switch 19 is connected to a contact point 19a.

Next, a description will be made below as to functions of the apparatus in relation to the operation of a wheel loader.

First, during operation① in a V-shaped operation (see Fig. 2) an operator handles the range lever 6 and the directional lever 7 so that the wheel loader moves at a second forward speed, the operator having previously handled the bucket lever in order that the bucket cylinder assumes its aforesaid specific elongate position. Thus, a signal "1" is outputted from the bucket position detecting sensor 11.

As the wheel loader 1 moves close to a hill-shaped earth mass 2, the operator handles the boom lever 4 in order that the boom cylinder assumes its aforesaid specific elongate position. Thus, the bucket comes into contact with the ground surface. This causes a signal "1" to be outputted from the boom position detecting sensor 12, whereby the AND conditions of the AND circuit 13 are established and the flip-flop 18 is set.

When the flip-flop 18 is set, the movable contact 19c is shifted form the contact point 19a to the contact point 19b. As a result, the solenoid SOL 2 is de-energized and the solenoid SOL 1 is energized, regardless of the fact that the range lever 6 selects a second speed stage, whereby the speed stage is shifted from the second speed to the first speed stage.

Namely, when the bucket is ready to plunge into the hill-shaped earth mass by handling of the boom lever 4, the speed stage is automatically shifted down to the first speed stage and thereby tractive force is caused to increase.

Once the flip-flop 18 has been set, it is not reset during the digging operation, irrespective of how the position of the bucket and the position of the boom vary, and the first speed continues to be maintained.

The conditions that the flip-flop 18 is reset are established when the directional lever 7 assumes a position other than forward movement F, when the range lever 6 assumes the position of a speed stage other than the second speed stage and when the cancel button 10 is depressed.

Usually, after the completion of a digging operation the wheel loader moves backwardly away from the hill-shaped earth mass at a second rearward movement speed. In this case, however, when the directional lever 7 assumes the position for rearward movement R, the flip-flop 18 is reset in the above described manner. This causes the movable contact 19c in the shifting switch 19 to be shifted from the contact point 19b to the contact point 19a, and the second speed stage which has been selected by the range lever 6 at present is selected. Namely, heretofore, at a time of rearward movement after the completion of a digging operation, the second rearward movement speed should be selected by simultaneously handling both the directional lever 7 and the range lever 6. However, in the above-described embodiment an operator can shift to the second rearward movement speed merely by handling the directional lever 7.

It should be noted that at a time of operation other than a V-shaped operation (at a time of operation for ground levelling or the like) the bucket may come into contact with the ground and be oriented in the horizontal direction but in this case it suffices that the cancel button 10 has been previously depressed in order to assure that no shift-down takes place automatically.

Further, sometimes the upper part of a hill-shaped earth mass is to be scraped off and in this case it suffices that a detected bucket position and a detected boom position from the bucket position detecting sensor 11 and the boom position detecting sensor 12 are corrected adequately.

The above embodiment of the present invention has been described with respect to the case where two levers, that is, a directional lever and a range lever are employed as transmission lever means. However, the present invention can be applied to the case where a single lever is employed as transmission lever means. Further, it is possible to apply the present invention to any one of a manual-shift vehicle, an automatic-shift vehicle and a manual/automatic shift vehicle, provided that an electric transmission control is employed.

As is apparent from the above description, an automatic speed stage changing apparatus for a wheel loader in accordance with the present invention can be employed for digging and loading work using a V-shaped operation and moreover it can be advantageously employed for ordinary digging work.

## Claims

1. Automatic speed stage changing apparatus for a wheel loader including a bucket (BK) and boom, the apparatus comprising :

speed stage signal generating means (6, 7) for generating a speed stage signal representative of a speed stage ;

speed stage selecting means (SOL 1-4) for electrically selecting a speed stage of a transmission to come into engagement in response to said speed stage signal ;

first detecting means (12) for providing a detection signal if the boom assumes a predetermined boom angle suitable for digging work ;

second detecting means (11) for providing a detection signal if the bucket assumes a predetermined bucket angle suitable for digging work ; and

shifting means (13, 14, 15, 16, 17, 18, 19) adapted to output a signal for a predetermined lower speed stage in place of the signal provided by said speed stage signal generating means if detecting signals are provided by both said first and second detecting means.

2. Apparatus as claimed in claim 1, wherein if an output signal of the speed stage signal generating means (6, 7) represents movement other than forward movement, said shifting means (13,14,15,16,17,18,19) is caused to input an output signal of the speed stage signal generating means into said speed stage selecting means (SOL 1-4).

3. Apparatus as claimed in claim 1 or 2, which further includes a cancel button (10) for releasing the shifting operation which is performed by said shifting means (13, 14, 15, 16, 17, 18, 19), an output signal of said speed stage signal generating means (6, 7) being applied to said speed stage selecting means (SOL 1-4) if said cancel button is actuated.

4. Apparatus as claimed in any preceding claim, wherein the shifting operation to be performed by said shifting means (13, 14, 15, 16, 17, 18, 19) is performed only if an output signal of said speed stage signal generating means (6, 7) represents a predetermined speed stage of forward movement.

5. Apparatus as claimed in any preceding claim, wherein the lower speed stage to be shifted to by said shifting means (13, 14, 15, 16, 17, 18, 19) is a first speed stage.

6. Apparatus as claimed in claim 4, wherein said predetermined speed stage is a second speed stage and a lower speed stage to be shifted to by said shifting means (13, 14, 15, 16, 17, 18, 19) is a first speed stage.

7. Apparatus as claimed in claim 1 or 2, wherein: said speed stage signal generating means (6, 7) includes a first lever (6) for selecting forward movement, a neutral state and rearward movement and a second lever (7) for selecting a speed stage ; and said shifting means (13, 14, 15, 16, 17, 18, 19) includes an AND circuit (13) for receiving a detection signal from said first detecting means (12) and a detection signal from said second detecting means (11), an OR circuit (17) for receiving a logically inverted signal relative to the forward movement selection signal of said first lever and a logically inverted signal relative to a second speed stage selection signal of said second lever, a flip-flop circuit (18) adapted to be set by an output of said AND circuit and reset by an output of said OR circuit and a shifting switch (19) for shifting the second speed stage selection signal of the second lever to a first speed stage selection signal in response to an output of said flip-flop circuit and then applying said first speed stage selection signal to said speed stage selecting means (SOL 1-4).

8. Apparatus as claimed in claim 3 or any of claims 4 to 7 as dependent on claim 3, wherein said speed stage signal generating means (6, 7) includes a first lever (6) for selecting forward movement, a neutral state and rearward movement and a second lever (7) for selecting a speed stage ; and said shifting means (13, 14, 15, 16, 17, 18, 19) includes an AND circuit (13) for receiving a forward movement selection signal of the first lever, a second speed stage selection signal of the second lever, a signal representative of the fact that the cancel button (10) is not actuated, a detection signal from said first detecting means (12) and a detection signal from said second detecting means (11), an OR circuit (17) for receiving a logically inverted signal relative to the forward movement selection signal of said first lever, a logically inverted signal relative to a second speed stage selection signal of said second lever and a signal representative of the fact that the cancel button (10) is actuated, a flip-flop circuit (18) adapted to be set in response to an output of said AND circuit and reset in response to an output of said OR circuit and a shifting switch (19) for shifting the second speed stage selection signal of the second lever to the first speed stage selection signal in response to an output of said flip-flop circuit and then applying the first speed stage selection to said speed stage selecting means (SOL 1-4).

**Ansprüche**

1. Automatisches Schaltgetriebe für einen Radlader mit einer Schaufel (BK) und einem Ausleger, umfassend :

einen Schaltstufensignalgeber (6, 7), der ein eine Schaltstufe bezeichnendes Schaltstufensignal erzeugt ;

eine Schaltstufenwähleinrichtung (SOL 1-4) zum elektrischen Wählen einer Getriebeschaltstufe, die aufgrund des Schaltstufensignals einzurücken ist ;

einen ersten Detektor (12), der ein Erfassungssignal liefert, wenn der Ausleger einen für Grabarbeiten geeigneten vorbestimmten Auslegerwinkel annimmt ;

einen zweiten Detektor (11), der ein Erfassungssignal liefert, wenn die Schaufel einen für Grabarbeiten geeigneten vorbestimmten Schaufelwinkel annimmt ; und

eine Umschalteinrichtung (13, 14, 15, 16, 17, 18, 19), die ein Signal für eine vorbestimmte niedrigere Schaltstufe anstelle des vom Schaltstufensignalgeber gelieferten Signals erzeugt, wenn Erfassungssignale sowohl vom ersten als auch vom zweiten Detektor erzeugt werden.

2. Schaltgetriebe nach Anspruch 1, wobei, wenn ein Ausgangssignal des Schaltstufensignalgebers (6, 7) eine andere als eine Vorwärtsbewegung bezeichnet, die Umschalteinrichtung veranlaßt wird, der Schaltstufenwähleinrichtung (SOL 1-4) ein Ausgangssignal des Schaltstufensignalgebers zuzuführen.

3. Schaltgetriebe nach Anspruch 1 oder 2, ferner umfassend eine Löschtaste (10) zur Aufhebung des von der Umschalteinrichtung (13, 14, 15, 16, 17, 18, 19) durchgeführten Umschaltvorgangs, wobei bei Betätigung der Löschtaste der Schaltstufenwähleinrichtung (SOL 1-4) ein Ausgangssignal des Schaltstufensignalgebers (6, 7) zugeführt wird.

4. Schaltgetriebe nach einem der vorhergehenden Ansprüche, wobei der von der Umschalteinrichtung (13, 14, 15, 16, 17, 18, 19) durchzuführende Umschaltvorgang nur durchgeführt wird, wenn ein Ausgangssignal des Schaltstufensignalgebers (6, 7) eine vorbestimmte Vorwärtsfahrt-Schaltstufe bezeichnet.

5. Schaltgetriebe nach einem der vorhergehenden Ansprüche, wobei die von der Umschalteinrichtung (13, 14, 15, 16, 17, 18, 19) umzuschaltende niedrigere Schaltstufe eine erste Schaltstufe ist.

6. Schaltgetriebe nach Anspruch 4, wobei die vorbestimmte Schaltstufe eine zweite Schaltstufe ist und eine von der Umschalteinrichtung (13, 14, 15, 16, 17, 18, 19) umzuschaltende niedrigere Schaltstufe eine erste Schaltstufe ist.

7. Schaltgetriebe nach Anspruch 1 oder 2, wobei: der Schaltstufensignalgeber (6, 7) einen ersten Hebel (6) zur Wahl von Vorwärtsfahrt, Neutralstellung und Rückwärtsfahrt und einen zweiten Hebel (7) zur Wahl einer Schaltstufe aufweist; und die Umschalteinrichtung (13, 14, 15, 16, 17, 18, 19) aufweist: ein UND-Glied (13), das ein Erfassungssignal vom ersten Detektor (12) und ein Erfassungssignal vom zweiten Detektor (11) empfängt, ein ODER-Glied (17), das ein relativ zu dem Vorwärtsfahrtwählsignal des ersten Hebels logisch invertiertes Signal und ein relativ zu einem Zweite-Schaltstufe-Wählsignal des zweiten Hebels logisch invertiertes Signal empfängt, ein Flipflop (18), das von einem Ausgangssignal des UND-Glieds setzbar und von einem Ausgangssignal des ODER-Glieds rücksetzbar ist, und einen Umschalter (19) zum Umschalten des Zweite-Schaltstufe-Wählsignals des zweiten Hebels zu einem Erste-Schaltstufe-Wählsignal aufgrund eines Ausgangssignals des Flipflops und zum anschließenden Zuführen des Erste-Schaltstufe-Wählsignals zu der Schaltstufenwähleinrichtung (SOL 1-4).

8. Schaltgetriebe nach Anspruch 3 oder nach einem der Ansprüche 4-7 unter Rückbeziehung auf Anspruch 3, wobei der Schaltstufensignalgeber (6, 7) einen ersten Hebel (6) zur Wahl von Vorwärtsfahrt, Neutralstellung und Rückwärtsfahrt und einen zweiten Hebel (7) zur Wahl einer Schaltstufe aufweist; und wobei die Umschalteinrichtung (13, 14, 15, 16, 17, 18, 19) aufweist: ein UND-Glied (13), das ein Vorwärtsfahrtwählsignal des ersten Hebels, ein Zweite-Schaltstufe-Wählsignal des zweiten Hebels, ein die Nichtbetätigung der Löschtaste (10) bezeichnendes Signal, ein Erfassungssignal vom ersten Detektor (12) und ein Erfassungssignal vom zweiten Detektor (11) empfängt, ein ODER-Glied (17), das ein relativ zu dem Vorwärtsfahrtwählsignal des ersten Hebels logisch invertiertes Signal, ein relativ zu einem Zweite-Schaltstufe-Wählsignal des zweiten Hebels logisch invertiertes Signal und ein die Betätigung der Löschtaste (10) bezeichnendes Signal empfängt, ein Flipflop (18), das von einem Ausgangssignal des UND-Glieds setzbar und von einem Ausgangssignal des ODER-Glieds rücksetzbar ist, und einen Umschalter (19), der das Zweite-Schaltstufe-Wählsignal des zweiten Hebels aufgrund eines Ausgangssignals vom Flipflop zum Erste-Schaltstufe-Wählsignal umschaltet und dann das Erste-Schaltstufe-Wählsignal der Schaltstufenwähleinrichtung (SOL 1-4) zuführt.

## Revendications

1. Dispositif automatique de changement de rapport de vitesse pour un chargeur à roues comprenant une benne (BK) et un chassis-benne, dispositif comprenant
   – des moyens (6, 7) de génération d'un signal de rapport de vitesse pour produire un signal de rapport de vitesse représentatif d'un rapport de vitesse ;
   – des moyens de sélection (SOL 1-4) de rapport de vitesse pour sélectionner électriquement un rapport de vitesse d'une transmission et l'enclencher en réponse à ledit signal de rapport de vitesse ;
   – des premiers moyens de détection (12) pour générer un signal de détection si le chassis-benne parviens à un angle de chassis prédéterminé correspondant à un travail d'extraction ;
   – des seconds moyens de détection (11) pour générer un signal de détection si la benne prend un angle de benne correspondant à un travail d'extraction ; et
   – des moyens de changements (13, 14, 15, 16, 17, 18, 19) aptes à générer un signal correspondant à un rapport de vitesse inférieur prédéterminé à la place du signal délivré par lesdits moyens de génération d'un signal de rapport de vitesse si des signaux de détections sont délivrés simultanément par lesdits premiers et seconds moyens de détections.

2. Dispositif selon la revendication 1 caractérisé en ce que, si le signal généré par les moyens (6, 7) de génération d'un signal de rapport de vitesse représente un mouvement autre qu'un mouvement en avant, lesdits moyens de changements (13, 14, 15, 16, 17, 18, 19) font qu'ils injectent dans lesdits moyens de sélection (SOL 1-4) de rapport de vitesse directement le signal de sortie des moyens de génération d'un signal de rapport de vitesse.

3. Dispositif selon la revendication 1 ou 2 caractérisé en ce qu'il comprend de plus un bouton d'annulation (10) pour désengager les opérations de changements accomplis par lesdits moyens de changements (13, 14, 15, 16, 17, 18, 19), un signal de sortie desdits moyens (6, 7) de génération d'un signal de rapport de vitesse étant directement appliqué aux moyens de sélection (SOL 1-4) de rapport de vitesse si ledit bouton d'annulation est enclenché.

4. Dispositif selon l'une des revendications précédentes caractérisé en ce que l'opération de changement devant être effectué par lesdits moyens de changements (13, 14, 15, 16, 17, 18, 19) est réalisée seulement si un signal de sortie desdits moyens (6, 7) de génération d'un signal de rapport de vitesse correspond à un rapport de vitesse prédéterminé pour un mouvement en avant.

5. Dispositif selon l'une des revendications précédentes caractérisé en ce que le rapport de vitesse inférieur devant être changé par lesdits moyens de changements (13, 14, 15, 16, 17, 18, 19) est le premier rapport de vitesse.

6. Dispositif selon la revendication 4 caractérisé en ce que ledit rapport de vitesse prédéterminé est un second rapport de vitesse et en ce que le rapport de vitesse inférieur devant être changé par lesdits moyens de changements (13, 14, 15, 16, 17, 18, 19) est le premier rapport de vitesse.

7. Dispositif selon la revendication 1 ou 2 caractérisé en ce que lesdits moyens (6, 7) de génération d'un signal de rapport comprennent un premier levier (6) pour selectionner un mouvement avant, arrière ou neutre et un second levier (7) pour selectionner un rapport de vitesse ; et en ce que lesdits moyens de changements (13, 14, 15, 16, 17, 18, 19) comprennent un circuit ET (13) recevant un signal de detection desdit premiers moyens de détection (12) et un signal de detection desdit seconds moyens de détection (11) ; ainsi qu'un circuit OU (17) recevant un signal logique inversé correspondant à un signal de selection du mouvement avant dudit premier levier et un signal logique inversé correspondant à un signal de selection du second rapport de vitesse dudit second levier, ainsi qu'un circuit Bistable (18) branché de tel sorte qu'il soit basculé par une sortie dudit circuit ET et reinitialisé par une sortie dudit circuit OU ; ainsi qu'un interrupteur de changement (19) pour changer le signal de selection du second rapport de vitesse du second levier en un signal de selection du premier rapport de vitesse en réponse à un signal de sortie dudit circuit Bistable et pour ensuite appliquer ledit signal de selection du premier rapport de vitesse aux aryens de sélection (SOL 1-4) de rapport de vitesse.

8. Dispositif selon la revendication 3 ou l'une quelconque des revendications 4 à 7 en dépendances de la revendication 3 caractérisé en ce que lesdit moyens (6, 7) de génération d'un signal de rapport de vitesse comprennent un premier levier (6) pour selectionner un mouvement avant, arrière ou neutre et un second levier (7) pour selectionner un rapport de vitesse ; et en ce que lesdits moyens de changements (13, 14, 15, 16, 17, 18, 19) comprennent un circuit ET (13) recevant un signal de selection du mouvement avant dudit premier levier, un signal de selection du second rapport de vitesse dudit second levier, un signal représentatif du fait que le bouton d'annulation (10) n'est pas enclenché, un signal de détection desdits premiers moyens de détection (12) et un signal de détection desdits seconds moyens de détection (11); ainsi qu'un circuit OU (17) recevant un signal logique inversé correspondant à un signal de selection du mouvement avant dudit premier levier et un signal logique inversé correspondant à un signal de selection du second rapport de vitesse dudit second levier et un signal représentatif du fait que le bouton d'annulation (10) est enclenché ; ainsi qu'un circuit Bistable (18) branché de tel sorte qu'il soit basculé par une sortie dudit circuit ET et reinitialisé par une sortie dudit circuit OU ; ainsi qu'un interrupteur de changement (19) pour changer le signal de selection du second rapport de vitesse du second levier en un signal de selection du premier rapport de vitesse en réponse à un signal de sortie dudit circuit Bistable et pour ensuite appliquer ledit signal de selection du premier rapport de vitesse aux moyens de sélection (SOL 1-4) de rapport de vitesse.

FIG.1

*FIG.2*

DIRECTIONAL
LEVER
7

F
N
R
1
2
3
4

5

RANGE LEVER

6

10 CANCEL BUTTON

4 BOOM LEVER

## FIG.3

1

2

BK

## FIG.4